Europäisches Patentamt

European Patent Office

Office européen des brevets

(19)

(11) **EP 0 588 703 B1**

(12) **FASCICULE DE BREVET EUROPEEN**

(45) Date de publication et mention
de la délivrance du brevet:
**02.06.1999 Bulletin 1999/22**

(51) Int Cl.⁶: **G06F 13/12**

(21) Numéro de dépôt: **93402222.9**

(22) Date de dépôt: **13.09.1993**

(54) **Système de transmission de données entre un bus d'ordinateur et un réseau en forme d'anneau à trés haut débit**

System zur Datenübertragung zwischen einem Rechnerbus und einem Hochgeschwindigkeitsringnetzwerk

System for data transmission between a computer bus and a high speed ring network

(84) Etats contractants désignés:
**DE ES FR GB IT**

(30) Priorité: **16.09.1992 FR 9211054**

(43) Date de publication de la demande:
**23.03.1994 Bulletin 1994/12**

(73) Titulaire: **BULL S.A.**
**78430 Louveciennes (FR)**

(72) Inventeurs:
- **Ravaux, Paul**
**F-78340 Les Clayes sous Bois (FR)**
- **Urien, Pascal**
**F-78450 Villepreux (FR)**

(74) Mandataire: **Colombe, Michel et al**
**Direction de la Propriété Intellectuelle BULL SA**
**Poste courrier:LV 58F35**
**68 route de Versailles**
**78430 Louveciennes (FR)**

(56) Documents cités:
**EP-A- 0 255 090**

- **COMPUTER COMMUNICATIONS REVIEW vol. 20, no. 4 , Septembre 1990 , NEW YORK US pages 135 - 144 COOPER ET AL 'Protocol Implementation on the Nectar Communication Processor'**
- **COMPUTER COMMUNICATIONS REVIEW vol. 18, no. 4 , Août 1988 , NEW YORK US pages 175 - 187 KANAKIA & CHERITON 'The VMP Network Adapter Board (NAB): High-Performance Network Communication for Multiprocessors'**

## Description

La présente invention concerne un système de transmission de données entre un bus d'ordinateur et un réseau en forme d'anneau à haut débit. Elle est plus particulièrement applicable à un réseau de transmission de données, de type FDDI, dont le support de transmission est constitué par des fibres optiques, ou encore de type TPDDI dont le support de transmission est constitué par une paire torsadée.

Les réseaux de transmission de données de type FDDI ou TPDDI, sont utilisés de plus en plus fréquemment et sont définis dans leurs grandes lignes dans les documents élaborés dans les comités de standardisation internationaux tel que l'ANSI (American National Standard Institute), sous la référence X3T9-5. Ces normes sont également adoptées par l'I.S.O , Organisation Internationale de Normalisation (International Standard Organization). Elles définissent un ensemble de caractéristiques physiques et électriques du réseau. Ces réseaux de transmission ont comme avantage d'avoir une valeur élevée des débits de transmission obtenus, de l'ordre de 100Mbits/s.

On sait que sur un réseau, les messages d'information émis par les différentes stations sont constitués d'une pluralité de trames. La trame est constituée de données utiles encadrées dans le temps par des caractères de commande placés en tête et en queue de trame. Dans les réseaux de type FDDI ou TPDDI, la longueur des trames est de 4 kilo-octet, et il existe deux types principaux de trames, définies par la norme, à savoir les trames de type LLC et les trames de types SMT. Les trames de type LLC sont constituées en fait de données utiles à transporter et constituent celles les plus couramment utilisées sur le réseau. Les trames de type SMT sont des trames spéciales dites de "management de station" ou encore de gestion de station, permettant de vérifier le bon fonctionnement de chacune des stations connectées au réseau.

On sait par ailleurs, que l'ensemble des éléments constitutifs fonctionnels d'un ordinateur (processeur, mémoire, contrôleur, etc...) est disposé sur un ensemble de carte à dimensions normalisées. Ces dernières sont reliées à un même bus généralement de type parallèle assurant les communications entre eux, les différentes cartes ainsi que le transport des données et l'alimentation électrique.

L'un des bus les plus couramment utilisé est le MULTIBUSII (marque déposée par la Société INTEL communément appelé PSB (ce qui signifie Parallel System Bus) et normalisé suivant la norme IEEE1296 (Institute of Electrical and Electronic Engineers).

Un tel bus d'ordinateur est relié au réseau (FDDI ou TPDDI) par l'intermédiaire d'un système de transmission de données (qu'on peut appeler également dispositif passerelle de connexion) dont la fonction est d'adapter les conditions de transmission des informations sur le MULTIBUSII, aux conditions de transmission sur le réseau. En effet, les modes de transmission des données, d'une part sur le bus PSB, d'autre part sur le réseau sont totalement différent, aussi bien en ce qui concerne le débit de transmission des informations, les protocoles de transmission utilisés, les codes d'écriture, les informations, le format, les caractères de commandes, etc...

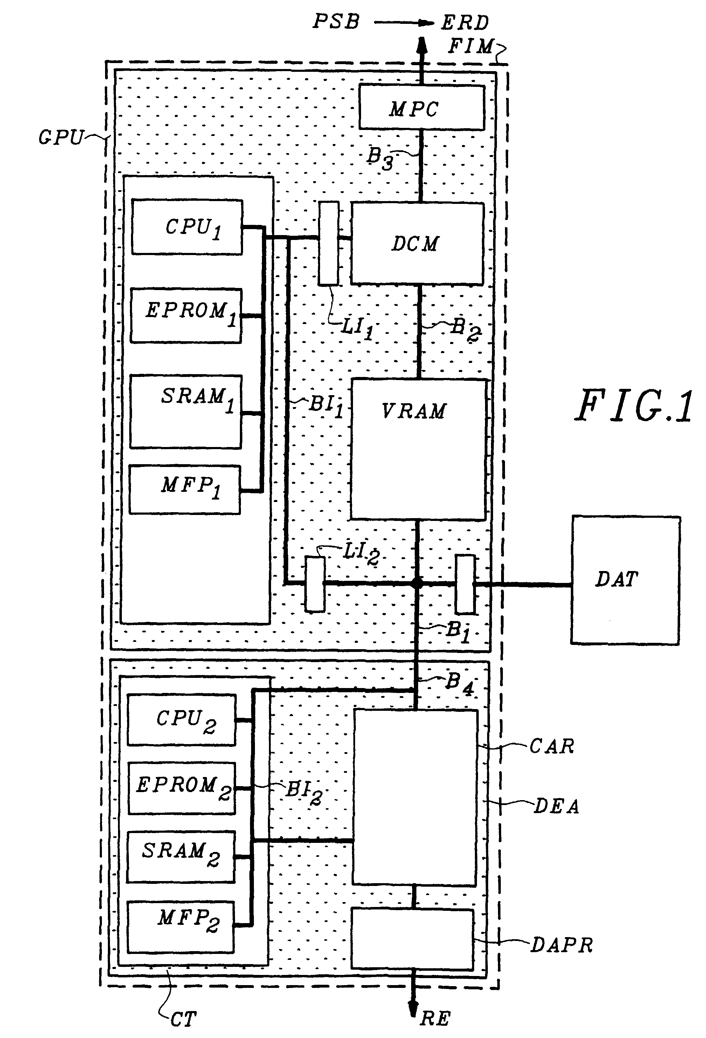

La structure physique générale d'un système de transmission de données est rappelée à la figure 1. Elle est décrite plus en détail, ainsi que divers modes de réalisation de fonctionnement, dans l'une et l'autre des demandes de brevet français N° 91 08908 déposée le 15.07.91 par BULL S.A. sous le titre "Dispositif universel de couplage d'un bus d'ordinateur à un contrôleur d'un groupe de périphériques" (FR-A-2 679 352 publié le 22.01.93) et N° 91 08907 déposée le même jour par la même demanderesse sous le titre "Système d'exploitation pour dispositif universel de couplage d'un bus d'ordinateur à une liaison spécifique d'un réseau" (FR-A-2 679 351 publié le 22.01.93) .

Un tel système de transmission de données FIM se compose de deux parties, à savoir d'une part, un dispositif universel de couplage GPU (sigle anglais de General Propose Unit) et d'un dispositif adaptateur DEA.

Le dispositif GPU est relié à PSB par un coprocesseur MPC, par exemple de type VL 82c389 fabriqué par la Société INTEL, lequel communique par mode message avec l'ordinateur ORD (non représenté pour simplifier la figure 1), ce mode étant défini dans la norme précitée IEEE 1296.

Le dispositif DEA peut être disposé physiquement sur la même carte que le dispositif universel de couplage GPU. Il est par ailleurs relié physiquement au réseau RE, d'une manière qui est par exemple celle décrite dans le brevet français N° 2 650 412 dont le titre est "Dispositif passerelle de connexion d'un bus d'ordinateur à un réseau fibre optique en forme d'anneau".

Le dispositif GPU comprend les différents éléments constitutifs essentiels suivants :

- le coprocesseur MPC déjà cité,

- le microprocesseur $CPU_1$ constituant de fait l'unité centrale du dispositif GPU, muni d'un bus interne $BI_1$ pour le transport des commandes destinées au dispositif adaptateur DEA. Ce microprocesseur est associé respectivement à une mémoire programmable effaçable $EPROM_1$, une mémoire vive $SRAM_1$ et un gestionnaire d'interruption à savoir $MFP_1$. Tous ces éléments $EPROM_1$, $SRAM_1$, $MFP_1$, sont tous connectés au bus interne $BI_1$,

- la mémoire de type vidéo-RAM à double port désignée par VRAM,

- le contrôleur d'accès direct mémoire DMAC, connecté d'une part au bus $B_2$, le reliant à la mémoire VRAM et d'autre part au bus $B_3$ le reliant au coprocesseur MPC,

- le bus $B_1$ qui relie la mémoire VRAM au dispositif adaptateur DEA dont les éléments constitutifs seront décrits par la suite.

Le microprocesseur CPU1 est, dans l'exemple de réalisation décrit ici, de type 68030 fabriqué par le firme MOTOROLA. Le bus interne $BI_1$ est un bus non multiplexé de 32 bits pour les données, et de 32 bits pour les adresses.

La mémoire morte effaçable EPROM1 a par exemple une capacité de 256 Kilo octets et elle contient les programmes d'auto-test et d'initialisation du dispositif universel de couplage GPU.

Le système d'exploitation du microprocesseur $CPU_1$ (Operating System) désigné par GPOS (sigle anglais de General Purpose Operating System) est contenu dans la mémoire statique $SRAM_1$ et est chargé à l'initialisation du dispositif de couplage GPU. La capacité de cette mémoire est par exemple de 1 Méga-octet. GPOS est décrit dans la demande N° 91 08907 précitée.

On voit à la figure 1 que le contrôleur d'accès direct DMAC est connecté en série d'une part entre la mémoire VRAM et le coprocesseur MPC et d'autre part entre ce dernier et le bus BI du microprocesseur $CPU_1$.

Une description détaillée de la structure et du fonctionnement du contrôleur DMAC est donnée dans la demande de brevet français N° 91 15814 déposée le 19.12.91 par la compagnie demanderesse sous le titre "Contrôleur de transfert multiple de données entre une pluralité de mémoire et un bus d'ordinateur" (FR-A-2 685 512 AB publié le 25.06.93).

Le microprocesseur $CPU_1$ est le cerveau du dispositif de couplage GPU : il initialise le transfert des données, réalise l'adaptation des protocoles, met en oeuvre son système d'exploitation et transfère les données entre DEA et l'ordinateur ORD et réciproquement tout en dialoguant avec DEA lequel il échange des commandes et des status de la manière qui sera décrite plus loin en relation avec la description de l'invention.

La description détaillée du rôle et du fonctionnement des autres éléments du dispositif de couplage est effectuée dans les trois demandes de brevet précitées.

On connaît des exemples de réalisation d'un dispositif adaptateur tel que DEA. Un tel exemple est décrit dans le brevet français N° 2 650 412 précité. Un tel dispositif comprend un contrôleur de gestion de transfert CT, un contrôleur d'accès au réseau DAR et un dispositif d'adaptation physique au réseau DAPR.

Le rôle du contrôleur de gestion de transfert CT est d'organiser le transfert des trames entre le dispositif GPU et le dispositif adaptateur et le réseau RE et réciproquement, tout en échangeant des commandes avec le microprocesseur $CPU_1$ du dispositif GPU. Le contrôleur d'accès au réseau permet le transfert physique des données depuis le bus $B_1$ vers le réseau RE via le dispositif d'adaptation physique DAPR et le bus B4 lequel est physiquement connecté à $B_1$. Le contrôleur d'accès au réseau CAR et le dispositif d'accès physique au réseau DAPR sont par exemple constitués par des éléments DP83265, DP83261, 83251 ou 55, 83231,83241 de la Société National semi-conductors.

Le contrôleur CT comprend un microprocesseur $CPU_2$, une mémoire $EPROM_2$, une mémoire statique $SRAM_2$, et un gestionnaire d'interruption $MFP_2$. Tous ces éléments sont reliés par le bus interne $BI_2$ du contrôleur de transfert CT. Il est bien évident que le microprocesseur $CPU_2$ est l'élément central du contrôleur de transfert CT et c'est lui qui organise le dialogue avec le microprocesseur $CPU_1$ par l'intermédiaire de commandes, d'une manière qui sera décrite en relation avec l'invention, dans la suite du texte.

Dans le dispositif d'adaptateur DEA selon l'art antérieur, les données et les commandes passent par l'intermédiaire de deux bus séparés, les commandes passant par l'intermédiaire du bus interne $BI_2$ du contrôleur de transfert CT. Par ailleurs, les commandes et les données transitent entre le dispositif adaptateur DEA et le dispositif de couplage GPU, par l'intermédiaire d'une interface de transfert composée de mémoires FIFO, une pour les données et une pour les commandes (non représenté à la figure 1).

La présence d'une telle interface entre le dispositif de couplage GPU et le dispositif adaptateur DEA, diminue les performances du système de transmission de données quant à la vitesse de transfert des informations de l'élément DEA à l'élément GPU et vice versa. Par ailleurs, du fait de la présence d'éléments FIFO, des interruptions sont générées (par construction) à chaque échange de commandes entre les deux microprocesseurs $CPU_1$ et $CPU_2$.

La présente invention permet de remédier à ces inconvénients en éliminant cet interface de transfert de type FIFO et en la remplaçant par des files de commandes disposées dans la mémoire VRAM. Par ailleurs, on dispose dans la mémoire $SRAM_2$ du dispositif adaptateur DEA des modules logiciels indépendant les uns des autres qui peuvent communiquer d'une part entre eux et d'autre part avec le système de gestion du microprocesseur $CPU_1$ par l'intermédiaire de boites à lettres disposées dans la mémoire $SRAM_2$ et/ou des files de commandes disposées dans la mémoire VRAM.

Selon l'invention, le système de transmission de données entre un bus d'ordinateur et un réseau en forme d'anneau à haut débit comprenant :

- un dispositif universel de couplage relié au bus et communiquant par une interface avec un dispositif adaptateur connecté au réseau par l'intermédiaire d'un contrôleur d'accès au réseau,

- le dispositif universel comprenant :

  . un premier microprocesseur associé à une première mémoire, et exécutant un système d'exploitation contenu dans celle-ci,
  . des moyens de transfert de trames depuis le bus vers le dispositif adaptateur et réciproquement, incluant une mémoire à double port disposée entre le bus et le dispositif adaptateur,

- le dispositif adaptateur comprenant :

  . un second microprocesseur de gestion de transfert des trames entre les moyens de transfert et le contrôleur d'accès et réciproquement

est caractérisé en ce que l'interface est constituée d'une pluralité de files de commandes comportant chacune un ensemble de commandes dont au moins une partie concerne l'émission ou la réception de trames, ces files étant disposées à l'intérieur de la mémoire double port, le second processeur de gestion comportant une pluralité de modules logiciel indépendants les uns des autres pour gérer l'émission et la réception de trames spécifiques du réseau, les modules logiciels communiquant entre eux et avec le système d'exploitation du premier microprocesseur au moyen de boites à lettres incluses dans le second processeur et/ou des files de commandes contenues dans la mémoire double port.

D'autres caractéristiques et avantages de la présente invention apparaitront dans la description suivante donnée à titre d'exemple non limitatif et en se référant aux dessins annexés.

Sur ces dessins :

- La figure 1 rappelle ce que sont les différents éléments constitutifs essentiels d'un système de transmission de données selon l'art antérieur, tel que décrit dans l'une ou l'autre des deux demandes de brevets précitées,

- La figure 2 montre les différents modules logiciels constituant le logiciel d'exploitation du dispositif adaptateur appartenant au système de transmission de données selon l'invention,

- La figure 3 composée des figures 3a et 3b montre comment est constituée l'interface entre le dispositif de couplage et le dispositif adaptateur d'une part et comment sont disposées les boites à lettres à l'intérieur de la mémoire du processeur de gestion du dispositif adaptateur,

- Les figures 4 et 5 montrent deux exemples de fonctionnement, pour deux types de trame déterminée du réseau FDDI, du dispositif adaptateur mettant en oeuvre deux modules logiciel parmi tous ceux qui composent le logiciel d'exploitation de ce dispositif.

On considère les figures 1, 2, 3.

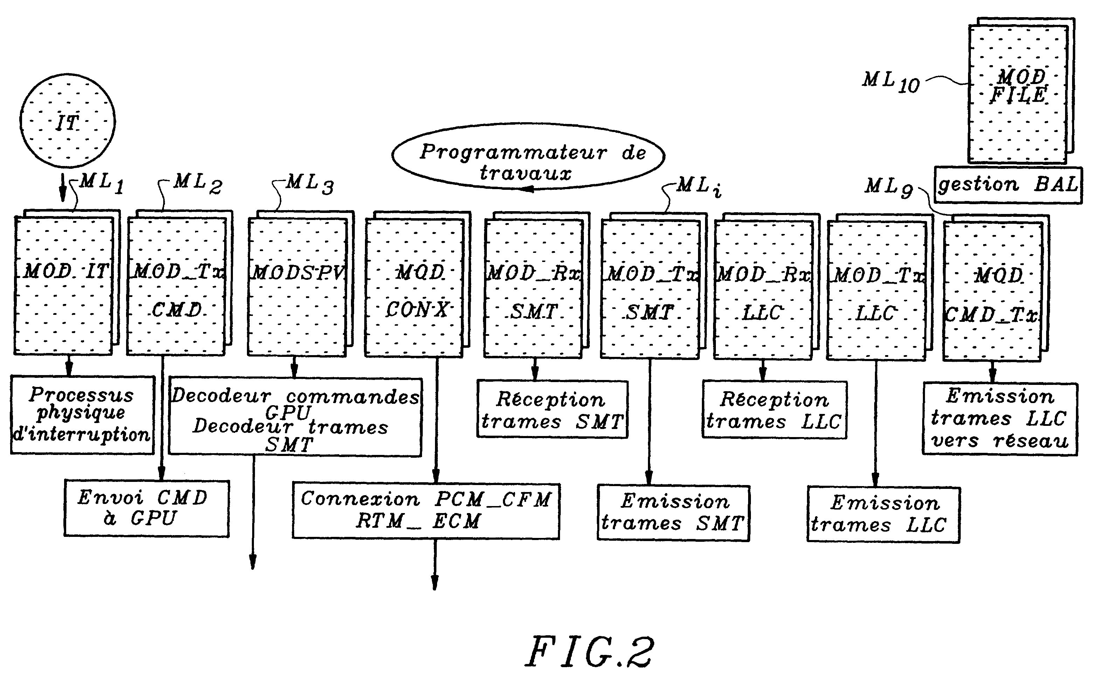

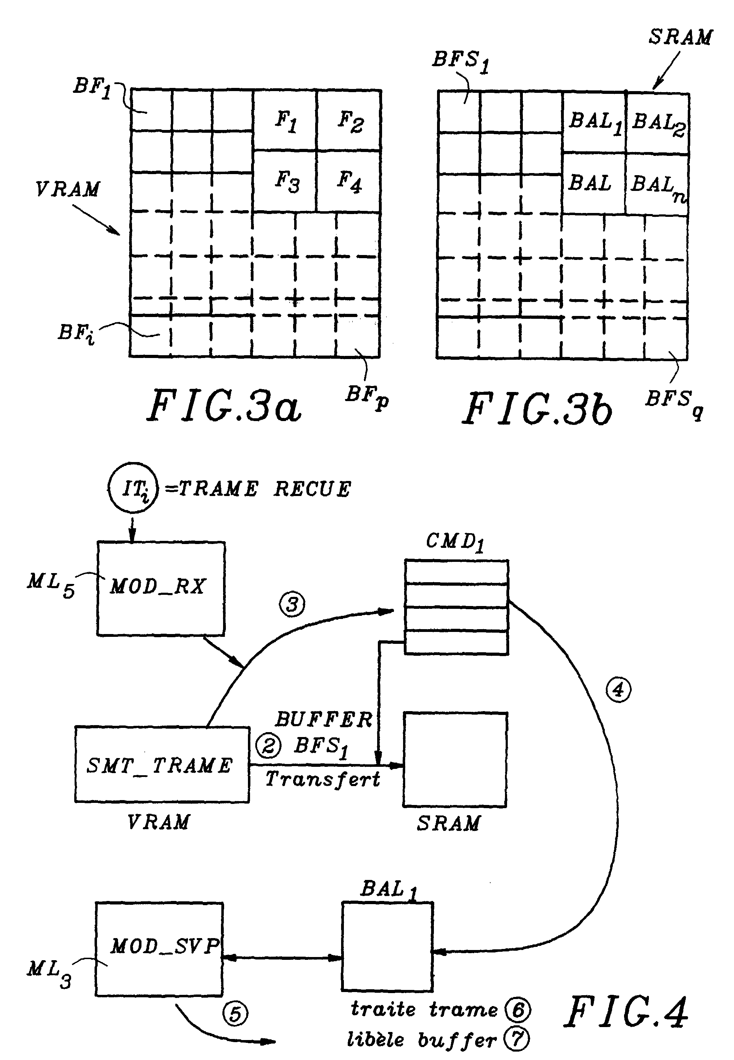

La structure physique du système de transmission de données selon l'invention est celle montrée à la figure 1. A la différence du système de transmission de données (appelé dispositif passerelle de connexion) décrit dans le brevet français 2 650 412 précité, l'interface entre le dispositif universel de couplage GPU et le dispositif adaptateur DEA n'est plus constituée par des mémoires FIFO disposées entre GPU et DEA, mais par une pluralité de files de commandes, telles que $F_1$ à $F_4$ disposées à l'intérieur de la mémoire VRAM du dispositif GPU. On peut voir ces files de commandes à la figure 3a dans la partie supérieure droite de la mémoire VRAM. Par ailleurs, le dispositif adaptateur DEA comporte une pluralité de modules logiciel $ML_1$, $ML_2$, ..., $ML_i$, ...., $ML_9$, $ML_{10}$, indépendants les uns des autres et communiquant entre eux par l'intermédiaire de boites à lettres $BAL_1$, $BAL_2$, $BAL_n$ disposées dans la mémoire statique $SRAM_2$ du contrôleur de gestion CT (voir figure 2 et 3b).

Chacune des deux mémoires VRAM, $SRAM_2$ peut contenir une pluralité de zones mémoire, désignées sous le vocable anglo-saxon de buffer, pouvant contenir tout ou partie des trames de données qui transitent entre le bus PSB et le réseau RE. Ainsi, la mémoire double port VRAM comporte-t-elle une pluralité de zones mémoire $BF_1$ à $BF_p$, alors que la mémoire statique $SRAM_2$ comprend une pluralité de zones mémoire $BFS_1$ à $BFS_q$. La longueur et l'adresse de départ de chacune de ces zones mémoire est bien entendu variable au cours du temps et dépend, des évènements qui affectent le système de transmission de données, donc de la nature et de la longueur des trames qu'il est nécessaire de transférer depuis le bus PSB vers le réseau RE et réciproquement.

Le dispositif adaptateur DEA permet donc de se connecter au réseau RE de type FDDI ou TPDDI, de recevoir ou d'émettre vers le réseau des trames de type LLC ou SMT, en assurant de façon autonome toutes réponses ou actions sollicitées par des évènements particuliers ou par des trames de type SMT. En d'autres termes, on peut dire que le dispositif adaptateur gère deux types de procédé, le premier concernant l'émission ou la réception de trames LLC, le second concernant l'émission ou la réception de trames SMT. Pour ce faire, le dispositif adaptateur a besoin de traiter essentiellement trois types de commandes qui sont définies dans l'une ou l'autre des files de commandes $F_1$ à $F_4$ montrées à la figure 3a, et contenues dans la mémoire VRAM. Ces commandes sont :

- les commandes d'ordre associées à l'émission ou à la réception de trames LLC,

- les commandes de type SMT qui sont reçues et émises sous forme de trames de type SMT, pour effectuer des tests de conformité soit du réseau soit de l'une quelconque des stations du réseau y compris celle qui comprend le dispositif adaptateur présent,

- les commandes administratives qui permettent la gestion de la configuration du dispositif adaptateur.

Ainsi qu'il a été dit plus haut, le dispositif adaptateur comprend une pluralité de modules logiciel, encore appelés tâches, qui communiquent entre elles au moyen des boites à lettres $BAL_1$ à $BAL_n$ et/ou des files de commandes $F_1$ à $F_4$. Une tâche est activée par un évènement physique qui peut être par exemple la réception d'une commande provenant de l'ordinateur ORD via le bus PSB ou encore la réception d'une trame, qu'elle soit de type LLC ou SMT. Une tâche peut être également activée par une autre tâche.

Toutes les commandes ont une structure identique au deux types de commandes montrées en annexe 1. Il s'agit d'une part de tout type de commandes émises par l'ordinateur ORD, appelées commandes HOST, ou encore de commandes de type interne engendrées par tout module logiciel du dispositif adaptateur DEA.

Une commande est constituée par une cellule de quatre mots de 32 bits chacun (soit 16 octets en tout). Un buffer ($BF_1$ à $BF_p$ ou $BFS_1$ à $BFS_q$) peut être associé ou non à une commande. Les quatres mots sont désignés par $MOT_1$ à $MOT_4$.

A l'annexe 1, chaque bit est désigné par le symbole b, et le rang du bit est indiqué. Ce rang se lit verticalement de haut en bas. Ainsi, le bit de rang 31 est le bit placé le plus à gauche et le bit de rang 0, le bit placé à droite.

On considère le mot $MOT_1$ :

Les bits $b_{26}$ à $b_{31}$ indiquent le code propre à la commande.

Aux valeurs suivantes respectives de b24-b25, correspondent les types d'opération suivants :

00 : opération illicite
01 : requête
10 : réponse
11 : annonce

Les bits b8 à b15 définissent l'émetteur de la commande qui peut être soit le système d'exploitation de GPU, soit l'un ou l'autre des modules logiciel DEA. Qu'il s'agisse de GPU ou de l'un ou l'autre des modules logiciel, ils sont définis par une valeur particulière de l'ensemble de ces bits $b_8$ à $b_{15}$.

Les bits $b_0$ à $b_7$ définissent le canal logique associé à la commande, les bits $b_0$ à $b_5$ étant égaux au zéro logique, le couple de bit b7-b6 ayant les valeurs suivantes :

- 00 indique qu'il s'agit du canal logique propre à GPU,

- 01 indique qu'il s'agit du canal logique interne,

- 10 indique qu'il s'agit du réseau

- 11 indique qu'il s'agit de la liaison série normalisée RS232 connectée au dispositif adaptateur DEA, utilisée à des fins de maintenance (non représentée pour simplifier à la figure 1).

En ce qui concerne le mot $MOT_2$ :

S'il s'agit d'une commande HOST (le canal logique est alors celui de GPU), les bits $b_0$ à $B_{31}$ définissent l'identificateur de la commande. L'identificateur d'une réponse à cette commande est égal à l'identificateur de la requête correspondante.

S'il s'agit d'une commande interne (dans ce cas le canal logique est différent de GPU), les bits $b_{16}$ à $b_{31}$ définissent l'identificateur de la commande et les bits $b_0$ à $b_{14}$ le numéro du buffer associé à cette commande, s'il y en a un. Le bit $b_{15}$, s'il est égal à zéro, définit un buffer associé situé dans $SRAM_1$, c'est à dire l'un des buffers $BFS_1$ à $BFS_q$. S'il est égal à 1, il s'agit d'un buffer associé situé en VRAM, c'est à dire l'un des buffers $BF_1$ à $BF_p$.

En ce qui concerne le mot MOT3 :

Les bits $b_{16}$ à $b_{31}$ identifient les différentes options possibles d'une requête ou le status d'une réponse. En effet, une requête peut s'effectuer de différentes façons. Ainsi, par exemple pour une requête de déconnexion, il y a plusieurs options possibles pour accomplir cette déconnexion.

Les bits $b_0$ à $b_{15}$ indiquent la longueur (en octets) du buffer associé à la commande. Si cette longueur est nulle, la commande n'est pas associée à un buffer.

En ce qui concerne le mot $MOT_4$

Les bits $b_0$ à $b_{31}$ identifient l'adresse du buffer associé éventuellement à la commande.

Deux canaux de commandes permettent l'émission et la réception de commandes. Chaque canal est constitué de deux files. Ces canaux sont les suivants (voir annexe 1bis) :

- le canal d'ordre permet l'émission et la réception de trames LLC. Il est associé à deux files, à savoir la file $F_1$ pour l'émission de trames et la file $F_2$ pour la réception de trames.

- le canal administratif permet l'envoi de commandes administratives à DEA. Il est associé à deux files $F_3$ et $F_4$.

Une file telle que $F_1$ à $F_4$ est une liste de commandes (rappelons qu'une commande est codée sur 16 octets). Le nombre d'éléments d'une file est une puissance de 2 : il y a donc $2^n$ commandes par file. A chaque file est associée un pointeur d'écriture PTFW et un pointeur de lecture PTFR.

Les opérations de lecture ou d'écriture d'une commande se déroulent de la manière qui suit.

Une interruption est associée à chacune des files F1 à F4. Une interruption est générée seulement lorsque la file passe de l'état vide à l'état non vide (il est évident que l'état vide correspond à l'absence de commande inscrite dans la file).

Pour mieux comprendre comment se déroule ces opérations de lecture ou d'écriture, on se référera à l'annexe 2.

En ce qui concerne l'écriture, si l'on a :
PTFR = (PTFW +1) (modulo $2^n$), la file est pleine.

Si la file n'est pas pleine, on effectue alors les opérations suivantes :

a) on insère la commande à l'indice PTFW,

b) on effectue l'opération logique PTFW = (PTFW +1) (modulo $2^n$).

c) si PTFW = PTFR + 1, il faut signaler l'insertion de cette commande par une interruption, ce qui est le cas lorsque l'on passe d'une file vide à une file non vide.

En ce qui concerne la lecture d'une commande :
Si PTFR = PTFW, la file est vide.

Dans le cas contraire, on effectue les opérations suivantes:

a) on lit la commande à l'indice PTFR.

b) on effectue l'opération logique PTFR = (PTFR + 1) (mod $2^n$).

Afin de pouvoir s'approprier un buffer, soit en mémoire VRAM, soit dans la mémoire $SRAM_2$, il est indispensable de posséder une liste d'indice de buffers. Cette liste comprend $2^n$ mots de 16 bits. Chaque mot représente l'indice d'un buffer disponible. Il existe deux listes de buffers appelées $BUFL_1$, $BUFL_2$ qui sont disposées dans la mémoire $SRAM_2$. La première de ces listes concernent les buffers contenus dans la mémoire VRAM, c'est à dire les buffers $BF_1$ à $BF_p$, alors que la seconde liste concerne les buffers contenus dans la mémoire $SRAM_2$, c'est à dire les buffers

BFS$_1$ à BFS$_q$.

A chaque liste de buffers sont associés respectivement un pointeur d'écriture PFWL, un pointeur de lecture PFRL et un compteur de buffers utilisés, indiquant le nombre total de buffers utilisés au sein de la liste, à savoir NBUF.

On obtient un buffer de la manière suivante :

Si le compteur de buffer a un contenu égal à la taille de la liste, celle-ci est pleine et cela signifie qu'il n'y a pas de buffer disponible. Dans le cas contraire, on lit l'indice de buffer disponible à l'adresse définie par le pointeur PFWL qui indique le premier buffer libre. Et on effectue ensuite l'opération logique :

$$PFWL = (PFWL + 1) \; (modulo \; 2^n).$$

Pour abandonner un buffer, on écrit l'indice de ce buffer qui devient donc disponible à l'adresse PFRL et on effectue ensuite l'opération logique :

$$PFRL = (PFRL + 1) \; (modulo \; 2^n).$$

Les boites à lettres BAL$_1$ à BAL$_n$ constituent chacune une liste de $2^n$ commandes, chaque commande pouvant être ou non associée à un buffer. Les buffers indiqués plus haut en VRAM ou SRAM$_2$ sont tous disponibles pour chacune des boites à lettres. Le fonctionnement d'une boîte à lettre est donc tout à fait identique au fonctionnement d'une file de commande.

Ainsi qu'il a été dit plus haut, toutes les commandes indiquent la longueur du buffer nécessaire à la réception ou à l'émission d'une trame. Etant donné que l'organisation de la mémoire VRAM s'effectue en page de 4 kilo-octets maximum chacune, et que une trame suivant la norme FDDI peut avoir une longueur allant jusqu'à 4500 octets, il peut être nécessaire d'utiliser deux pages en mémoire VRAM pour mémoriser une trame en entier. Dans ce dernier cas, le dispositif adaptateur édite alors deux commandes, la première contenant la longueur de la première portion de trame, la deuxième indiquant la longueur de la deuxième portion de trame.

Le système de transmission de données selon l'invention contient quatre canaux d'interruption, GPU gérant deux canaux d'interruption appelés IRQ-Tx et IRQ-REQ qui signalent respectivement le passages des files de commandes $F_1$ et $F_4$ de l'état vide à non vide, le dispositif adaptateur DEA gérant deux canaux d'interruption IRQ-Rx et IRQ-IND signalant respectivement le passage des files $F_2$ et $F_3$ de l'état vide à l'état non vide.

Il n'y a aucun acquittement sur une émission de trame. Cet acquittement est implicite : en effet, si une commande correspondant à cette émission a été lue, il est admis qu'elle est exécutée. Lors de l'émission, GPU donne des adresses et des longueurs de buffer, dans les commandes correspondantes. Si le pointeur de la file de commande évolue, cela signifie que la trame correspondante est émise et que le buffer correspondant associé est alors libéré. On voit donc qu'une file de commande sert à la fois :

- à gérer la commande,

- à définir et gérer les emplacements de mémoire où doivent être mémorisées les trames ou portions de trames.

En réception, les mêmes grandes lignes que celles définies ci-dessus sont appliquées. Il y a une seule interruption dans chaque file de commandes, et celle-ci gère à la fois les commandes et les buffers associés. Cette façon de procéder accroit la vitesse d'exécution du système de transmission de données.

Les différents modules logiciel contenus dans la mémoire SRAM$_2$ du dispositif adaptateur DEA sont les suivants :

1. Le module ML$_1$, encore appelé MODIT traite les interruptions physiques IT autres que celles relatives à l'émission et la réception de trames, ou que celles relatives aux différentes files de commandes. On peut citer en particulier le traitement des interruptions issues des éléments constituant le contrôleur d'accès au réseau CAR, ou encore les interruptions issues de la liaison RS232. En fonction de l'interruption analysée par ce module ML$_1$, ce dernier signale l'évènement à l'un ou l'autre des modules logiciel concerné éventuellement par ladite interruption, cet évènement étant signalé par l'intermédiaire de la boîte à lettres associée au module en question. Le module est alors activé lorsque sa boîte à lettre passe de l'état vide à l'état non vide et il est désactivé lorsque sa boîte à lettres est vide.

2. Le module logiciel ML$_2$, encore appelé MOD-TX-CMD émet des commandes vers le dispositif de couplage GPU ou vers la liaison RS232. Il gère le pointeur PTFW de la file de commande F3. Il est activé lorsque sa boîte à lettres passe de l'état vide à l'état non vide et est désactivé lorsque cette dernière est vide.

3. Le module $ML_3$, encore appelé MODSPV est un module dit de supervision , qui traite les commandes administratives et les commandes SMT. Ce module est activé lorsque lorsque la file $F_4$ passe de l'état vide à l'état non vide et lorsque simultanément sa boîte à lettres est non vide. Il est désactivé lorsque $F_4$ et sa boîte à lettres sont vides simultanément.

Le module gère donc les pointeurs PTFR de la file $F_4$. Il est également responsable de l'analyse et de l'exécution des commandes de GPU autres que celles relatives à l'émission ou à la réception de trames de type LLC. Ce module analyse également les trames SMT reçues et est responsable de la génération des réponses si cela s'avère nécessaire.

4. Le module $ML_4$ encore appelé MODCONX implémente un certain nombre d'automates définis dans la norme SMT. Ces automates sont les automates ECM (Entity Coordination Management), PCM (Physical Connexion Management), CFM (Configuration Management), et RMT (Ring Management) de ce standard SMT.

- L'automate ECM reçoit les demandes de connexion et déconnexion au réseau RE de type FDDI, demande issue du module $ML_3$,

- PCM réalise les connexions ou déconnexions physiques,

- CFM effectue les connexions électriques entre les éléments PHY(s) et MAC du contrôleur d'accès réseau CAR (définis dans la norme FDDI et dans les documents du constructeur de CAR, voir ci-dessus),

- RMT insère le MAC de la station dans l'anneau. Il signale les changements d'état de l'anneau au module $ML_2$ (réseau connecté ou réseau déconnecté).

- le module $ML_4$ est activé par le passage de sa boîte à lettre de l'état vide à non vide, ou par des interruptions issues des éléments PLAYER ou BMAC du contrôleur d'accès au réseau CAR (définis également dans les documents du constructeur et dans la norme FDDI). Le module est désactivé lorsque sa boîte à lettres est vide et que les automates précédents ont atteint un état stable.

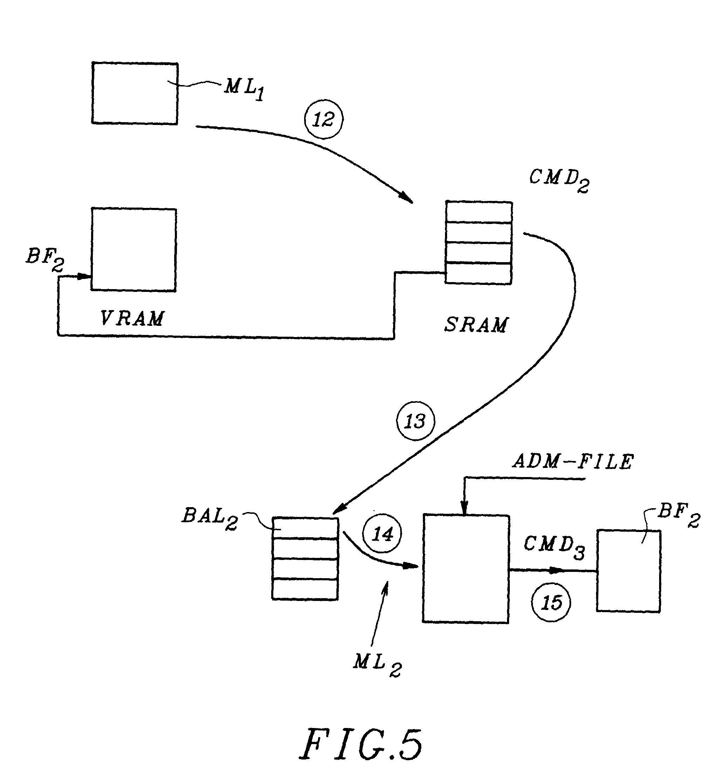

5. Le module $ML_5$, encore appelé MOD-RX-SMT traite la réception de trames SMT. Il est activé lorsque le buffer correspondant de réception (celui où est reçu la trame SMT en question) passe de l'état vide à l'état non vide,et il est désactivé lorsque ce même buffer de réception est vide. Lorsqu'une trame SMT doit être traitée, une commande est insérée dans la boîte à lettres associée au module $ML_3$. Ce type de fonctionnement sera illustré plus en détail ci-après, en relation avec la figure 4.

6. Le module $ML_6$, encore appelé MOD-TX-SMT gère l'émission de trames SMT. Il est activé lorsque la boîte à lettre qui lui est associée est non vide ou encore lors de la fin d'émission d'une trame SMT. Il est désactivé lorsque la boîte à lettres qui lui correspond est vide.

7. Le module $ML_7$, encore appelé MOD-RX-LLC traite la réception de trames LLC. Il est activé lorsque le buffer de réception qui a été alloué à la trame en question passe de l'état vide à l'état non vide et est désactivé lorsque ce même buffer est vide. Ce module gère le pointeur PTFW de la file de commande $F_2$. A chaque appel correspondant à une réception de trame, ce module examine la situation du pointeur PTFR de la file $F_2$, afin de réutiliser éventuellement des buffers de réception à nouveau disponibles.

8. Le module $ML_8$, encore appelé MOD-TX-LLC est activé par une interruption signalant la fin d'émission d'une trame LLC, ou d'un ensemble chaîné de trames LLC. Il notifie à l'ordinateur ORD, par l'intermédiaire du pointeur PTFR de la file $F_1$, la disponibilité de buffers qui ont été préalablement utilisés. Il détecte également l'insertion de nouveaux messages dans la file $F_1$ et active si nécessaire le module $ML_9$, ci-après décrit.

9. Le module $ML_9$, encore appelé MOD-CMD-TX traite les demandes d'émission en provenance de l'ordinateur ORD. Il est activé lors de la transition de la file $F_1$ de l'état vide à non vide. Il est désactivé lorsque toutes les demandes d'émission en provenance de ORD ont été traitées. Ce module réalise par ailleurs toutes les opérations nécessaires à l'émission de trames LLC. A ce sujet, on se référera à la demande de brevet 91 08908 précitée qui décrit ces opérations.

10. Le module $ML_{10}$ encore appelé MODFILE est chargé de la gestion des boites à lettres $BAL_1$ à $BAL_n$.

On se réfère désormais aux figures 4 et 5 qui montrent deux exemples de fonctionnement de modules fréquemment utilisés et significatifs, à savoir les modules $ML_5$ et $ML_2$.

On considère la figure 4, et on suppose que le dispositif adaptateur DEA reçoit une trame de type SMT provenant du réseau RE. Cette trame arrive directement dans la mémoire VRAM et est par exemple stockée dans le buffer $BF_1$. Une interruption $IT_1$ avertit le module $ML_5$, à savoir MOD-RX-SMT qu'une trame est arrivée dans la mémoire VRAM dans le buffer $BF_1$. On passe ensuite à l'opération 2.

2. le module $ML_5$ transfère la trame de type SMT du buffer $BF_1$ dans un buffer libre $BFS_1$ en mémoire SRAM. Pour ce faire, le module $ML_5$ consulte la liste des buffers et choisit un buffer libre.

3. Durant cette opération le module $ML_5$ émet une commande $CMD_1$ où il indique l'emplacement du buffer $BFS_1$ ainsi que la longueur de ce dernier. On passe ensuite à l'opération 4.

4. Le module $ML_5$ transfère le contenu de la commande $CMD_1$ dans la boîte à lettre $BAL_1$ (supposée être celle du module de supervision MOD-SPV, module $ML_3$). Le module $ML_3$ effectue alors l'opération 5.

5. $ML_3$ va lire le contenu de sa boîte à lettres $BAL_1$ et trouve qu'il faut traiter une trame SMT qui se trouve dans le buffer $BFS_1$, trame qui a une longueur déterminée.

6. Le module de supervision traite alors la trame de type SMT, suivant la norme FDDI et une fois que ceci est effectué passe à l'opération 7.

7. ML3 libère le buffer BFS1 suivant les modalités indiquées plus haut.

On se réfère désormais à la figure 5 qui décrit comment une commande émise par le dispositif adaptateur DEA est envoyée à GPU. Dans ce cas, c'est le module $ML_2$ (MOD-TX-CMD) qui agit. On suppose donc que, lors de l'opération 11 le processeur $CPU_2$ a émis une commande $CMD_2$ par l'intermédiaire de tout module (autre que $ML_2$), par exemple $ML_1$. Cette commande est supposée être une commande interne. Elle est destinée à la file $F_3$.

On passe à l'opération 12.

12. Lors de cette opération, le module $ML_1$ consulte la liste des buffers et s'alloue un buffer libre en mémoire VRAM, par exemple le buffer $BF_2$ qui recevra le contenu de la commande avant que celle-ci ne soit transférée dans la file de commande. On passe ensuite à l'opération 13.

13. Lors de cette opération $ML_1$ transfère la commande dans la boîte à lettres $BAL_2$ de $ML_2$. Une fois que ceci est fait, on passe à l'opération 14.

14. Lors de cette opération $ML_2$ transfère le contenu de sa boîte à lettres dans la file $F_3$. Une fois que ceci est fait, la main passe au microprocesseur $CPU_1$ de GPU qui vient lire la commande dans la file $F_3$ et la transfère dans le buffer $BF_2$.

ANNEXE 1

EP 0 588 703 B1

## Commande HOST

| bbbbbbbb 33222222 10987654 | bbbbbbbb 22221111 76543210 | bbbbbbbb 1111 54321098 | bbbbbbbb 76543210 | |
|---|---|---|---|---|
| <CODE>TP | ..RFU... | 00000000 | 00000000 | MOT 1 |
| <-..............IDENTIFICATEUR...............-> | | | | MOT 2 |
| ..STATUS/OPTION.. | | <-..LONGUEUR..-> | | MOT 3 |
| <-.......ADRESSE.......-> | | | | MOT 4 |

## Commande interne

| bbbbbbbb 33222222 10987654 | bbbbbbbb 22221111 76543210 | bbbbbbbb 1111 54321098 | bbbbbbbb 76543210 | |
|---|---|---|---|---|
| <CODE>TP | ..RFU... | <Source> | <Canal.> | MOT 1 |
| <IDENTIFICATEUR.> | | B<..Num_Buffer..> | | MOT 2 |
| ..STATUS/OPTION.. | | <-..LONGUEUR..-> | | MOT 3 |
| <-.......ADRESSE.......-> | | | | MOT 4 |

# ANNEXE 1bis

```
* * * * * * *
* GPU *
* * * * * * *
```

Canal d'ordre            Canal administratif

Tx_File = F2       ADM_REQ_file = F4

Rd       Wr       Rd       Wr

<       >       <       >

<       >       <       >

Wr       Rd       Wr       Rd

Rx_File = F1       ADM_IND_File = F3

```
* * * * * * *
* DEA *
* * * * * * *
```

## ANNEXE 2

| File Vide | File pleine | Insertion d'une commande, avec signalisation par interrruption | Insertion d'une commande, sans signalisation par interruption |
|---|---|---|---|
| vide | COM4 | vide | COM2 |
| vide | COM5 | vide   PTFW-> | vide |
| PTFW -> vide   <-PTFR | COM6   <-PTFR | COM0   <-PTFR | vide |
| vide   PTFW-> | vide   PTFW-> | vide | vide |
| vide | COM0   <-PTFR | vide | vide |
| vide | COM1 | vide | vide |
| vide | COM2 | vide | COM0   <-PTFR |
| vide | COM3 | vide | COM1 |

**Revendications**

1. Système de transmission de données (STD) entre un bus (PSB) d'ordinateur (ORD) et un réseau (RE) en forme d'anneau à haut débit comprenant :

   - un dispositif universel de couplage (GPU) relié au bus et communiquant par une interface avec un dispositif adaptateur (DEA) connecté au réseau par l'intermédiaire d'un contrôleur d'accès au réseau (CAR),

   - le dispositif universel (GPU) comprenant :

      . un premier microprocesseur (CPU1) associé à une première mémoire (SRAM1), et exécutant un système d'exploitation contenu dans celle-ci,
      . des moyens de transfert de trames (MPC, DMAC, VRAM) depuis le bus (PSB) vers le dispositif adaptateur (DEA) et réciproquement, incluant une mémoire à double port (VRAM) disposée entre le bus (PSB) et le dispositif adaptateur, ce dernier comprenant :
      . un second microprocesseur (CPU2) de gestion de transfert de trames entre les moyens de transfert de trames et le contrôleur d'accès au réseau et réciproquement,

   caractérisé en ce que l'interface est constituée d'une pluralité de files de commandes (F1 à F4) comportant chacune

12

un ensemble de commandes dont au moins une partie concerne l'émission ou la réception de trames, ces files étant disposées à l'intérieur de la mémoire double port, le second processeur de gestion (CPU2) traitant une pluralité de modules logiciel (ML1 à ML10) indépendant les uns des autres, pour gérer l'émission et la réception de trames spécifiques du réseau, les modules communiquant entre eux et avec le système d'exploitation du premier microprocesseur (CPU1) au moyen de boites à lettres (BAL1, etc..) incluses dans le second processeur (CPU2) et/ou des files de commandes (F1 à F4) contenues dans la mémoire double port (VRAM).

**2.** Système de transmission de données selon la revendication 1, dans lequel le réseau est de type FDDI, caractérisé en ce que les files de commandes comprennent :

- des commandes d'ordre associé à l'émission ou à la réception de trames de type LLC,

- des commandes de type SMT qui sont reçues et émises sous forme de trames SMT pour effectuer des tests de conformité soit du réseau, soit de l'une quelconque des stations de celui-ci,

- des commandes administratives qui permettent la gestion de la configuration du dispositif adaptateur.

**3.** Système de transmission selon la revendication 2, caractérisé en ce que, chaque commande est constituée par une cellule de quatre mots de 32 bits, une zone mémoire ($BF_1$ à $BF_p$ ou $BFS_1$ ou $BFS_q$) pouvant être associée ou non à cette commande, cette zone mémoire pouvant se trouver soit dans la mémoire à double port, soit dans une mémoire associée au second microprocesseur.

**4.** Système de transmission selon la revendication 2, caractérisé en ce qu'il comprend deux canaux de commandes permettant l'émission ou la réception de commande, chaque canal étant constitué de deux files de commandes, l'un pour l'émission et l'autre pour la réception de commande, le premier canal étant un canal d'ordre permettant l'émission et la réception de trames de type LLC, alors que le second canal est un canal administratif permettant l'envoi de commandes administratives au dispositif adaptateur.

**5.** Système de transmission selon la revendication 4, caractérisé en ce que, il y a $2^n$ commandes par file, chaque file étant associée à un pointeur d'écriture (PTFW) et à un pointeur de lecture (PTFR).

**6.** Système de transmission de données selon la revendication 1, caractérisé en ce que les boîtes à lettres ($BAL_1$, ...., $BAL_n$) constituent chacune une liste de $2^n$ commandes, chaque commande pouvant être ou non associée à une zone mémoire, soit dans la mémoire double port, soit dans une mémoire associée au second microprocesseur.

**7.** Système de transmission de données selon la revendication 1, caractérisé en ce qu'il comprend des canaux d'interruption signalant le passage des files de commande de l'état vide à l'état non vide.

**8.** Système de transmission selon la revendication 1, caractérisé en ce que chaque file de commande permet :

1. de gérer la commande,
2. de définir et gérer les emplacements de zones mémoire où doivent être mémorisés les trames ou portions de trames concernées par la dite commande.

**Patentansprüche**

**1.** System (STD) zur Übertragung von Daten zwischen einem Bus (PSB) eines Rechners (ORD) und einem Netz (RE) in Form eines Rings mit hohem Durchsatz, mit:

- einer Universalkopplungsvorrichtung (GPU), die mit dem Bus verbunden ist und über eine Schnittstelle mit einer Adaptervorrichtung (DEA) kommuniziert, die an das Netz über einen Netzzugriffs-Controller (CAR) angeschlossen ist,

- wobei die Universelvorrichtung (GPU) enthält:

• einen ersten Mikroprozessor (CPU1), dem ein erster Speicher (SRAM1) zugeordnet ist und der ein in diesem Speicher enthaltenes Betriebssystem ausführt,

- Mittel (MPC, DMAC, VRAM) zur Übertragung von Rahmen vom Bus (PSB) zur Adaptervorrichtung (DEA) und umgekehrt, die einen Dualport-Speicher (VRAM) enthalten, der zwischen dem Bus (PSB) und der Adaptervorrichtung angeordnet ist, wobei diese letztere enthält:
- einen zweiten Mikroprozessor (CPU2) zur Steuerung der Rahmenübertragung zwischen den Rahmenübertragungsmitteln und dem Netzzugriffscontroller und umgekehrt,

dadurch gekennzeichnet, daß die Schnittstelle aus mehreren Befehlsreihen (F1 bis F4) gebildet ist, wovon jede eine Gesamtheit von Befehlen enthält, wovon wenigstens ein Teil das Senden oder das Empfangen von Rahmen betrifft, wobei diese Reihen im Dualport-Speicher angeordnet sind, wobei der zweite Steuerprozessor (CPU2) mehrere voneinander unabhängige Software-Module (ML1 bis ML10) verarbeitet, um das Senden und das Empfangen von spezifischen Rahmen des Netzes zu steuern, wobei die Module untereinander und mit dem Betriebssytem des ersten Mikroprozessors (CPU1) mittels Briefkästen (BAL1 usw.), die im zweiten Prozessor (CPU2) enthalten sind, und/oder mittels der im Dualport-Speicher (VRAM) enthaltenen Befehlsreihen (F1 bis F4) kommunizieren.

2. Datenübertragungssystem nach Anspruch 1, in dem das Netz vom FDDI-Typ ist, dadurch gekennzeichnet, daß die Befehlsreihen enthalten:

- Ordnungsbefehle, die dem Senden oder dem Empfangen von Rahmen des Typs LLC zugeordnet sind,

- Befehle des Typs SMT, die in Form von SMT-Rahmen empfangen und gesendet werden, um Konformitätstests entweder des Netzes oder irgendeiner seiner Stationen auszuführen,

- Managementbefehle, die die Steuerung der Konfiguration der Adaptervorrichtung ermöglichen.

3. Übertragungssystem nach Anspruch 2, dadurch gekennzeichnet, daß jeder Befehl durch eine Zelle aus vier Wörtern mit 32 Bit gebildet ist, wobei eine Speicherzone ($BF_1$ bis $BF_p$ oder $BFS_1$ oder $BFS_q$) diesem Befehl zugeordnet sein kann oder nicht, wobei diese Speicherzone sich entweder im Dualport-Speicher oder in einem dem zweiten Mikroprozessor zugeordneten Speicher befindet.

4. Übertragungssystem nach Anspruch 2, dadurch gekennzeichnet, daß es zwei Befehlskanäle enthält, die das Senden und das Empfangen eines Befehls ermöglichen, wobei jeder Kanal aus zwei Befehlsreihen gebildet ist, eine zum Senden und eine zum Empfangen eines Befehls, wobei der erste Kanal ein Ordnungskanal ist, der das Senden und das Empfangen von Rahmen des Typs LLC ermöglicht, während der zweite Kanal ein Managementkanal ist, der das Schicken von Managementbefehlen an die Adaptervorrichtung ermöglicht.

5. Übertragungssystem nach Anspruch 4, dadurch gekennzeichnet, daß $2^n$ Befehle pro Reihe vorhanden sind, wobei jeder Reihe ein Schreibzeiger (PTFW) und ein Lesezeiger (PTFR) zugeordnet sind.

6. Datenübertragungssystem nach Anspruch 1, dadurch gekennzeichnet, daß die Briefkästen ($BAL_1$, ..., $BAL_n$) je- weils eine Liste aus $2^n$ Befehlen bilden, wobei jeder Befehl einer Speicherzone entweder im Dualport-Speicher oder in einem dem zweiten Mikroprozessor zugeordneten Speicher zugeordnet sein kann.

7. Datenübertragungssystem nach Anspruch 1, dadurch gekennzeichnet, daß es Unterbrechungskanäle enthält, die den Übergang der Befehlsreihen vom leeren Zustand zum nichtleeren Zustand melden.

8. Übertragungssystem nach Anspruch 1, dadurch gekennzeichnet, daß jede Befehlsreihe ermöglicht:

1. den Befehl zu steuern,
2. die Plätze derjenigen Speicherzonen zu definieren und zu steuern, an denen die Rahmen oder Rahmenabschnitte, die von dem Befehl betroffen sind, gespeichert werden sollen.

**Claims**

1. System for transmission of data (STD) between a bus (PSB) of a computer (ORD) and a high-speed ring network (RE) comprising:

- a universal coupling device (GPU) connected to the bus and communicating via an interface with an adapter device (DEA) connected to the network via a network access controller (CAR),
- the universal device (GPU) comprising:

  . a first microprocessor (CPU1) associated with a first memory (SRAM1), and executing an operating system contained therein,
  . means for transferring frames (MPC, DMAC, VRAM) from the bus (PSB) to the adapter device (DEA) and vice versa, including a dual-port memory (VRAM) arranged between the bus (PSB) and the adapter device, the latter comprising:
  . a second microprocessor (CPU2) for managing the transfer of frames between the frame transfer means and the network access controller and vice versa,

  characterised in that the interface is constituted by a plurality of command queues (F1 to F4) each comprising a set of commands, at least part of which concerns the sending or receiving of frames, these queues being arranged inside the dual-port memory, the second management processor (CPU2) processing a plurality of software modules (ML1 to ML10) independent of one another, to manage the sending and receiving of specific frames of the network, the modules communicating amongst themselves and with the operating system of the first microprocessor (CPU1) by means of mailboxes (BAL1, etc.) included in the second processor (CPU2) and/or command queues (F1 to F4) contained in the dual-port memory (VRAM).

2. Data transmission system according to Claim 1, in which the network is of FDDI type, characterised in that the command queues comprise:

   - order commands associated with the sending or receiving of LLC-type frames,
   - SMT-type commands, which are received and sent in the form of SMT frames, to perform compliance tests either on the network or on any one of the stations thereof,
   - administrative commands, which permit the management of the configuration of the adapter device.

3. Transmission system according to Claim 2, characterised in that each command is constituted by a cell of four 32-bit words, a memory zone ($BF_1$ to $BF_p$ or $BFS_1$ or $BFS_q$), which can be associated or not with that command, it being possible for said memory zone to be located either in the dual-port memory, or in a memory associated with the second microprocessor.

4. Transmission system according to Claim 2, characterised in that it comprises two command channels permitting the sending or receiving of commands, each channel being constituted by two command queues, one for the sending and the other for the receiving of commands, the first channel being an order channel permitting the sending and receiving of LLC-type frames, while the second channel is an administrative channel permitting the sending of administrative commands to the adapter device.

5. Transmission system according to Claim 4, characterised in that there are $2^n$ commands per queue, each queue being associated with a writing pointer (PTFW) and a reading pointer (PTFR).

6. Data transmission system according to Claim 1, characterised in that the mailboxes ($BAL_1$, ..., $BAL_n$) each constitute a list of $2^n$ commands, it being possible for each command to be associated or not with a memory zone, either in the dual-port memory, or in a memory associated with the second microprocessor.

7. Data transmission system according to Claim 1, characterised in that it comprises interruption channels signalling the changing of the command queues from empty status to non-empty status.

8. Transmission system according to Claim 1, characterised in that each command queue makes it possible:

   1. to manage the command,
   2. to define and manage the memory zone locations where the frames or portions of frames affected by said command should be stored.

*FIG.1*

FIG.2

FIG.3a

FIG.3b

FIG.4

*FIG.5*